# EUROPÄISCHE PATENTANMELDUNG

(11) **EP 1 958 843 A1**
(43) Veröffentlichungstag der Anmeldung: **20.08.2008**
(21) Anmeldenummer: 08075535.8
(22) Anmeldetag: 06.09.2006
(51) Int. Cl.: B61C 3/00, B61C 5/00, B60K 1/00, B60K 5/00, B60L 11/00

(54) **Verfahren zur Herstellung einer Lokomotive mit wahlweise einer Motor-Generator- oder Stromwandler-Hochspannungsgerüst-Kombination.**

(30) Priorität: 16.09.2005 DE 102005045641; 19.09.2005 DE 102005044744
(62) Teilanmeldung aus: 06791957.1
(71) Anmelder: Bombardier Transportation GmbH, 10785 Berlin (DE)
(72) Erfinder: Trotsch, Peter, 34128 Kassel (DE); Ehrhardt, Michael, 68165 Mannheim (DE); Löber, Mirko, 34246 Vellmar (DE); Köck, Fritz, 69483 Wald-Michelbach (DE); Still, Ludwig, 64683 Einhausen (DE); Buscher, Michael, Dr. Ing., 8706 Meilen (CH); Landolt, Martin, 5330 Zurzach (CH); Bikle, Urs, Dr. sc. techn., 8820 Wädenswil (CH)
(74) Vertreter: Patentanwälte Bressel und Partner

(57) **Zusammenfassung**

Die Erfindung betrifft die Herstellung einer Lokomotive, wobei eine tragende Fahrzeugkonstruktion mit einem Aggregat (DE) zur Bereitstellung einer Antriebsleistung aus einer Energiequelle und mit zusätzlichen Vorrichtungen (AUX, KT) verbunden wird, die einen Betrieb der Lokomotive ermöglichen. Als Aggregat wird wahlweise eine Motor-Generator-Kombination, insbesondere ein dieselelektrisches Aggregat, oder eine Stromwandler-Hochspannungsgerüst-Kombination gewählt, sodass entweder die Motor-Generator-Kombination (erster Fall) oder die Stromwandler-Hochspannungsgerüst-Kombination (zweiter Fall) als das Aggregat mit der tragenden Fahrzeugkonstruktion verbunden wird. Die Orte, an denen das Aggregat (DE) und die zusätzlichen Vorrichtungen (AUX, KT) an der tragenden Fahrzeugkonstruktion angeordnet und mit der tragenden Fahrzeugkonstruktion verbunden werden, sind im ersten Fall und im zweiten Fall gleich.

## Beschreibung

Die Erfindung betrifft ein Verfahren zum Herstellen einer Lokomotive.

Unter einer Lokomotive wird ein Schienenfahrzeug verstanden, das insbesondere einen Zugverband mit einer Vielzahl von Wagen im Zugbetrieb oder Schubbetrieb bewegen kann. Dabei weist die Lokomotive üblicherweise weitere Einrichtungen auf, die sie von Personenwagen und Güterwagen unterscheidet, z.B. zumindest einen Führerraum und/oder andere Vorrichtungen, die einen Betrieb der Lokomotive und/oder des Zugverbandes ermöglichen.

Unter einer Lokomotive wird auch ein Triebkopf für einen Schienenfahrzeug-Zugverband verstanden. "Lokomotive" im Sinne der hier vorliegenden Anmeldung ist jedoch auf ein Triebfahrzeug oder einen Triebkopf für schwere Schienenfahrzeuge und Zugverbände beschränkt, insbesondere auf Fern-, Güter und Regionalzüge, und schließt daher leichte Schienenfahrzeuge wie Straßenbahnen und Untergrundbahnen des Nahverkehrs aus.

Ein Merkmal einer Lokomotive ist ein Maschinenraum, in dem das oder die Antriebsaggregate und Hilfsbetriebe angeordnet sind. Da somit der Innenraum der Lokomotive für technische Einrichtungen benötigt wird, steht kein Platz für Fahrgäste oder Transportgut zur Verfügung. Unter einer Lokomotive wird daher insbesondere ein derartiges Schienen-Triebfahrzeug verstanden, wobei die Lokomotive an Waggons und/oder andere Lokomotiven angekoppelt werden kann.

Es ist bekannt, eine Lokomotive mit einem Aggregat zur Bereitstellung einer Antriebsleistung aus einer Energiequelle zu versehen. Das Aggregat kann z.B. als dieselelektrisches Aggregat ausgestaltet sein. In diesem Fall wird von einem Motor des Aggregats Dieselkraftstoff verbrannt und mechanische Leistung erzeugt, die wiederum über einen Generator des Aggregats in elektrische Leistung umgewandelt wird. Diese elektrische Leistung ist die bereitgestellte Antriebsleistung und kann z.B. auf verschiedene Antriebsmotoren der Lokomotive verteilt werden.

Bei einer anderen üblichen Ausgestaltung eines Antriebsaggregats liegt die Energiequelle in Form eines Stromversorgungsnetzes vor. Häufig handelt es sich bei der Spannung des Stromversorgungsnetzes um eine Wechselspannung. Zunächst wird die Wechselspannung durch einen Transformator, der hier als Haupttransformator bezeichnet wird, in eine niedrigere Spannung transformiert. Ein Gleichrichter des Aggregats wandelt die transformierte Wechselspannung in Gleichspannung um, welche über einen Zwischenkreis wiederum einem Wechselrichter zugeführt wird. In dem Wechselrichter wird aus der Gleichspannung eine Dreiphasen-Wechselspannung erzeugt, mit der wiederum ein oder mehrere Antriebsmotoren der Lokomotive betrieben werden können.

Es sind auch andere Ausgestaltungen von Aggregaten bekannt, die an anderen Stromversorgungsnetzen angeschlossen werden können (z.B. an einem Gleichspannungsnetz) und/oder die auf andere Weise aus dem Stromversorgungsnetz die Antriebsleistung erzeugen. Bei Betrieb an einem Gleichspannungsnetz ist es üblich, zwischen Stromabnehmer und dem Wechselrichter eine Drosselspulen-Anordnung vorzusehen, die zeitliche Schwankungen der Netzspannung glättet.

Bei Lokomotiven, die für den Betrieb an mehreren elektrischen Systemen ausgelegt sind (Mehrsystem-Lokomotive), können Teile des Haupttransformators als Drosselspule genutzt werden.

Es ist ferner bekannt, dass Lokomotiven zusätzliche Vorrichtungen aufweisen, die einen Betrieb der Lokomotive ermöglichen. Dabei kann es sich um Vorrichtungen handeln, die dem Antrieb der Lokomotive dienen, und/oder um Hilfsvorrichtungen, die dem Betrieb von Einrichtungen dienen, welche nicht für den Antrieb der Lokomotive erforderlich sind, jedoch in der Lokomotive angeordnet sind (z.B. Versorgungseinrichtungen für den Zugverband, Bremsvorrichtungen und Zugsicherungsvorrichtungen).

Es haben in den letzten Jahren zahlreiche Entwicklungen stattgefunden, die der Senkung von Herstellungskosten von Lokomotiven dienten. Wie auch aus anderen technischen Gebieten bekannt ist, nimmt das Einsparpotenzial mit fortschreitender Dauer der Entwicklungen stetig ab. Die weitere Entwicklung stößt insbesondere deshalb an Grenzen, da die hergestellten Stückzahlen von Lokomotiven im Vergleich zu anderen Märkten gering sind und da außerdem eine Vielzahl von unterschiedlichen Typen von Lokomotiven benötigt wird. Es existieren, wie bereits erwähnt, unterschiedliche Arten von Stromversorgungsnetzen. Außerdem gibt es nicht elektrifizierte Schienenwege, so dass auch dieselelektrische Maschinen oder andere Maschinen benötigt werden, die ohne Stromversorgungsnetz auskommen.

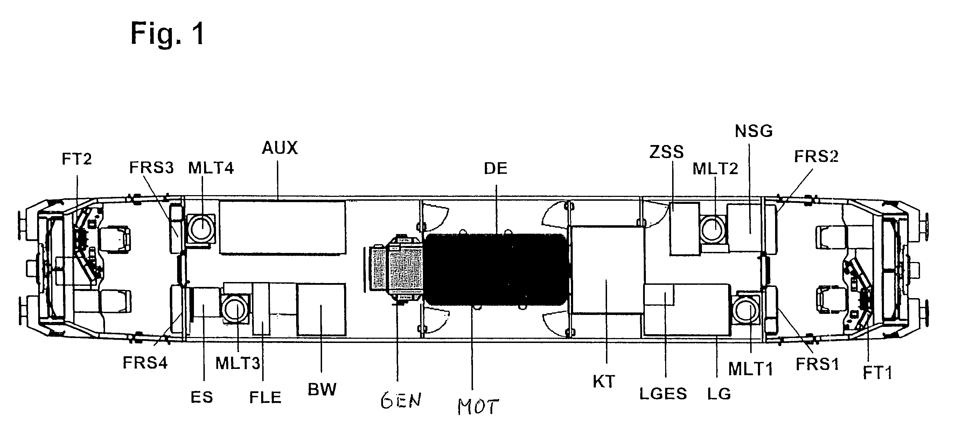

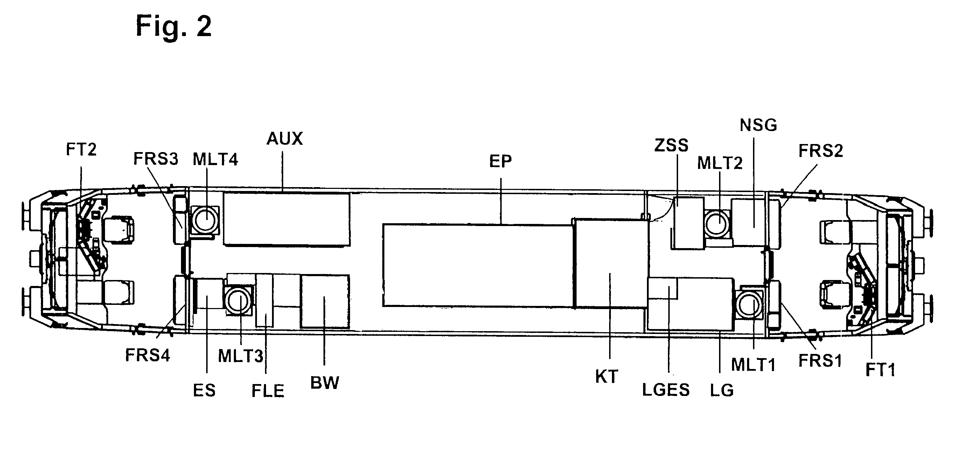

DE 1063628-A offenbart ein austauschbares Antriebsaggregat für einen Schienentriebzug, wobei Endglieder des Schienentriebzuges einen oder mehrere Diesel- oder Elektroantriebsmotoren aufweisen. Es soll möglich sein, Schienentriebzüge derart auszubilden, dass sie sowohl auf durch Gleich- oder Wechselstrom elektrifizierten Strecken als auch auf Strecken ohne Stromzuführungsleitung die jeweils zur Verfügung stehende wirtschaftlichste Energiequelle ausnutzen, ohne dass zusätzliche Antriebseinheiten mitgeführt werden müssen. Dies soll dadurch erreicht werden, dass bei austauschbaren Antriebsaggregaten für Schienentriebzüge einer oder mehrere Dieselmotoren durch einen oder mehrere Elektromotoren mit ihren Stromabnehmerteilen ausgetauscht werden, wobei der Austausch der Antriebsmotoren im Endglied direkt erfolgen kann. Den verschiedenartigen Antriebsmotoren werden außer den gleichen Getrieben auch die gleichen Laufwerke zugeordnet. Nach Fig. 2 erfolgt die Erzeugung der mechanischen Antriebsenergie des Endgliedes durch einen Verbrennungsmotor. Bei dem Endglied nach Fig. 1 wird die elektrische Antriebsenergie dem Fahrdraht durch den Stromabnehmer entnommen und dem Elektromotor zugeführt. Von dem Elektromotor bzw. dem Verbrennungsmotor wird das Antriebsdrehmoment auf eine Kupplung übertragen. Von dieser Kupplung an erfolgt die Übertragung der Antriebsleistung in beiden Fällen gleichartig über ein Getriebe auf die Treibachsen. In dem Endglied nach Fig. 2 sind alle Vorrichtungen zur Aufnahme der elektrischen Anlage bereits vorgesehen. Ein Austausch der verschiedenartigen Antriebsanlagen kann aber auch dadurch erfolgen, dass das Endglied oder der Endgliederkopfteil vom Triebzug abgetrennt und durch ein anderes ersetzt wird.

Es ist eine Aufgabe der vorliegenden Erfindung, die Herstellungskosten für Lokomotiven weiter zu senken. Insbesondere soll außerdem Material und Gewicht eingespart werden, was wiederum zur Reduktion der Einkaufskosten und des Herstellungsaufwandes führt.

Die beigefügten Ansprüche definieren den Schutzumfang.

Der vorliegenden Erfindung liegt die Idee zu Grunde, Lokomotiven mit unterschiedlichen Antriebsaggregaten einheitlich, d.h. in möglichst übereinstimmender Weise herzustellen. Insbesondere kann die tragende Fahrzeugkonstruktion, mit der das Aggregat und die zusätzlichen Vorrichtungen verbunden werden, für verschiedene Antriebsaggregat-Typen identisch gestaltet sein. Zumindest ein Teil der zusätzlichen Vorrichtungen und das jeweilige Antriebsaggregat der Lokomotive bei verschiedenen Aggregat-Typen werden jeweils an demselben Ort an der tragenden Fahrzeugkonstruktion angeordnet und mit der tragenden Fahrzeugkonstruktion verbunden. Dadurch können die Stückzahlen von identischen Teilen wesentlich erhöht werden und Arbeitsschritte bei der Herstellung der Lokomotive optimiert werden.

Das jeweilige Aggregat wird wahlweise aus der Gruppe, bestehend aus zumindest einer Motor-Generator-Kombination (z.B. einem dieselelektrischen Aggregat) und aus zumindest einer Stromwandler-Hochspannungsgerüst-Kombination ausgewählt, so dass entweder die Motor-Generator-Kombination (erster Fall) oder die Stromwandler-Hochspannungsgerüst-Kombination (zweiter Fall) als das Aggregat mit der tragenden Fahrzeugkonstruktion verbunden wird. Dadurch, dass im ersten Fall und im zweiten Fall das jeweilige Aggregat an demselben Ort mit der tragenden Fahrzeugkonstruktion verbunden wird, kann insgesamt eine besonders hohe Einsparung an Kosten und Aufwand erzielt werden. Insbesondere können Leitungswege zwischen Teilen der Aggregate verkürzt werden sowie Anschlussleitungen (elektrischer, pneumatischer, hydraulischer und/oder gastechnischer Art) hinsichtlich ihrer Verlegung innerhalb der Lokomotive und hinsichtlich ihrer Länge optimiert werden. Die Anordnung des Aggregats an derselben Stelle der tragenden Konstruktion ermöglicht es insbesondere, beliebige Kombinationen der zusätzlichen Vorrichtungen ebenfalls an jeweils derselben Stelle der tragenden Konstruktion anzuordnen.

Unter einem Stromwandler wird eine Einrichtung verstanden, die elektrische Ströme in beliebiger Weise wandelt. Bei der Wandlung kann es sich um eine Änderung des Spannungsniveaus, der Frequenz und/oder Art (Wechselstrom oder Gleichstrom) des Stroms handeln. Ein Stromwandler, der zwischen den Netzanschluss und die Stromleitung zu zumindest einem Fahrmotor geschaltet ist, weist beispielsweise den Haupttransformator, den Gleichrichter am Eingang des Zwischenkreises und den Wechselrichter am Ausgang des Zwischenkreises auf (für den Betrieb an einem Wechselspannungsnetz) und/oder eine Drosselspulen-Anordnung zur Glättung von Gleichspannungsschwankungen und den Wechselrichter am Ausgang des Zwischenkreises auf (für den Betrieb an einem Gleichspannungsnetz). Vorzugsweise sind die genannten Einrichtungen eines solchen Stromwandlers Teil eines Antriebsaggregats für eine E-Lokomotive (elektrischen Lokomotive).

Ein Stromrichter weist dagegen nicht den Haupttransformator auf, sondern beispielsweise lediglich den Gleichrichter und den Wechselrichter (für den Betrieb an einem Wechselspannungsnetz) oder lediglich den Wechselrichter (für den Betrieb an einem Gleichspannungsnetz).

Ein Wechselrichter kann auch als Umrichter bezeichnet werden.

Und einem Hochspannungsgerüst wird eine Einrichtung verstanden, in der elektrische Bauteile und elektrische Leitungen für den Hochspannungsteil der Stromversorgung angeordnet sind. Der Hochspannungsteil weist im Fall des Betriebes an einem (Lokomotiven-externen) Wechselspannungsnetz insbesondere die elektrische Verbindung zwischen dem Stromabnehmer und dem Haupttransformator sowie einen Hochspannungs-Hauptschalter auf. Im Fall des Betriebes an einem Gleichspannungsnetz weist der Hochspannungsteil insbesondere die elektrische Verbindung zwischen dem Stromabnehmer und der Drosselspulen-Anordnung sowie einen Hochspannungs-Hauptschalter auf. Vorzugsweise ist zumindest der Hochspannungs-Hauptschalter in dem Hochspannungsgerüst angeordnet.

Der Hochspannungs-Hauptschalter kann jedoch auch an anderer Stelle angeordnet sein, z. B. auf dem Dach der Lokomotive. In diesem Fall kann statt der Stromwandler-Hochspannungsgerüst-Kombination auch lediglich der Stromwandler als Antriebsaggregat innerhalb des Maschinenraums angeordnet sein bzw. wahlweise zur Anordnung dort ausgewählt werden. Wenn in dieser Anmeldung von der Stromwandler-Hochspannungsgerüst-Kombination die Rede ist, ist auch der Fall mit eingeschlossen, dass lediglich der Stromwandler in dem Gerüst angeordnet ist. Der Stromwandler kann in jedem Fall weitere Einrichtungen wie Frequenzfiltereinrichtungen, weitere Schalter, Sicherungen aufweisen.

Dieselelektrische Aggregate werden bereits bei vorbekannten Lokomotiven etwa in der Mitte der Lokomotive, sowohl betrachtet in Längsrichtung (Fahrtrichtung) als auch betrachtet quer zu Längsrichtung, angeordnet.

Stromwandler und Hochspannungsgerüste (für die elektrischen Leitungen und elektrischen Einrichtungen in den Hochspannungspfaden bei elektrischen Antrieben) wurden dagegen bisher meist verteilt in der Lokomotive angeordnet, wobei mehrere Exemplare von Stromrichtern und mehrere Exemplare von Hochspannungsgerüsten meist durch einen Mittelgang getrennt sind, durch den eine Person hindurchgehen kann. Lediglich in der Zeit vor der Einführung von Drehstrommotoren (als Antriebsmotoren von Lokomotiven) wurden Transformatoren auch (betrachtet quer zur Fahrtrichtung) zentral in Maschinenräumen von Lokomotiven angeordnet (siehe z. B. AT 106754 aus dem Jahr 1927). Mit der Einführung von Drehstrommotoren und Stromrichtern zur Steuerung der Drehstrommotoren wurde die Anordnung mit Mittelgang eingeführt.

Bei der besonders bevorzugten Ausgestaltung der Erfindung wird nun die Stromwandler-Hochspannungsgerüst-Kombination als eine zusammengehörige (d.h. an einem einzigen Ort angeordnete) Einheit ausgestaltet, die an derselben Stelle wie sonst die Motor-Generator-Kombination angeordnet werden kann. Unter einer zusammengehörigen Einheit wird eine Anordnung verstanden, die aus verschiedenen Einzelteilen und Einrichtungen zusammengesetzt werden kann, wobei im fertig gestellten, montierten Zustand jedoch im Wesentlichen keine Abstände innerhalb der Einheit verbleiben, die Teilbereiche der Einheit voneinander trennen. Insbesondere ist kein Gang zwischen Teilen der Einheit vorhanden. Wesentliche Abstände sind Abstände oder Lücken, die für die Raumausnutzung innerhalb der Lokomotive wesentlich sind. Jedoch können in konkreten Ausführungsformen räumliche Bereiche der Stromwandler-Hochspannungsgerüst-Kombination leer stehen, die bei anderen Ausführungsformen der Kombination (zum Beispiel für den Betrieb an Wechselspannung statt Gleichspannung) mit Einrichtungen versehen sind. Bei einer Mehrsystem-Lokomotive sind dagegen vorzugsweise alle räumlichen Bereiche mit den entsprechenden Einrichtungen versehen.

Die zusammengehörige Einheit kann auch in dem Sinne als ungeteilter Block bezeichnet werden, dass keine wesentliche räumliche Teilung bzw. Trennung vorhanden ist und die Einheit im montierten Zustand daher einen durchgehenden Block bildet. Anders ausgedrückt sind alle Teile der Einheit unmittelbar (nicht lediglich über die tragende Fahrzeugkonstruktion) mit anderen Teilen der Einheit verbunden. Dies schließt nicht aus, dass (wie bei einer bevorzugten Ausgestaltung des Herstellungsverfahrens) Teile der Einheit als separate Blöcke vorgefertigt werden und bei der Endmontage miteinander verbunden werden.

Dies schließt auch nicht aus, dass (wie zum Beispiel bei einer besonders bevorzugten Ausführungsform) der Haupttransformator bzw. für den Betrieb an einem Gleichspannungsnetz die Drosselspulen-Anordnung unterflur angeordnet ist bzw. wird und der übrige Teil des Stromwandlers als Antriebsaggregat im Maschinenraum angeordnet ist bzw. wird. Bei dieser bevorzugten Ausführungsform einer E-Lokomotive ist der ungeteilte Block, der durch den übrigen Teil des Stromwandlers, d. h. durch eine Stromrichtereinheit mit zumindest einem Stromrichter und optional durch das Hochspannungsgerüst gebildet wird, (quer zur Fahrtrichtung der Lokomotive betrachtet) in der Mitte des Maschinenraums angeordnet. Weiterhin ist eine tragende Konstruktion (insbesondere ein Längsträger auf Höhe des Lokomotivenbodens) des Fahrzeugkastens der Lokomotive vorhanden, die das Gewicht des ungeteilten Blocks trägt, wobei der ungeteilte Block über der tragenden Konstruktion angeordnet ist, und die das Gewicht des Transformators bzw. der Drosselspulen-Anordnung trägt, wobei der Transformator bzw. diese Anordnung unterhalb der tragenden Konstruktion angeordnet ist.

Der ungeteilte Block kann zumindest einen ersten und einen zweiten Stromrichter aufweisen, wobei die verschiedenen Stromrichter mit verschiedenen Antriebsmotoren oder verschiedenen Antriebsmotoren-Gruppen der Lokomotive elektrisch (z. B. über einen Zwischenkreis und einen Wechselrichter) verbunden werden. Dabei kann der ungeteilte Block an einem Ort der tragenden Fahrzeugkonstruktion angeordnet werden, der bezüglich einer horizontal verlaufenden Richtung, die senkrecht zur Fahrtrichtung der Lokomotive steht, mittig in der Lokomotive angeordnet ist. Der übliche Mittelgang bei Elektrolokomotiven entfällt daher zumindest im Bereich des Blocks.

Dabei kann/können die Stromrichtereinheit und optional auch Teile des Hochspannungsgerüsts jeweils durch zumindest eine elektrische Verbindung, die sich durch die tragende Fahrzeugkonstruktion im Bereich des Maschinenraum-Bodens hindurch erstreckt, mit dem Haupttransformator bzw. der Drosselspulen-Anordnung verbunden sein.

Es hat sich gezeigt, dass durch die Ausgestaltung der Stromwandler-Hochspannungsgerüst-Kombination als ungeteilter Block eine erhebliche Menge an elektrischen Leitungsmaterialien (insbesondere Kupfer) eingespart werden kann. Bei einer Elektrolokomotive mit typischen Abmessungen, konnten bis zu 600 kg Kupfer für elektrische Leitungen eingespart werden. Die Konstruktion ist somit Gewicht sparend. Außerdem wird Platz gespart, der beispielsweise dafür genutzt werden kann, dass sowohl an der in Fahrtrichtung rechten als auch der linken Seite ein Gang zur Verfügung gestellt wird, durch den sich Personen bewegen können. Z. B. kann einer der Gänge zum Durchgang verwendet werden, während der andere mit einer Tür verschlossen als Servicegang mit sehr guter Zugänglichkeit zu allen Komponenten ausgeführt werden kann.

Ferner wird bevorzugt, dass auch eine Kühleinrichtung, die der Kühlung des Aggregats dient, unmittelbar neben dem Aggregat angeordnet wird, insbesondere in Fahrtrichtung der Lokomotive betrachtet, unmittelbar vor und/oder hinter dem Aggregat angeordnet wird. Dabei ist die Kühleinrichtung bevorzugter Maßen Platz sparend als Kühlturm ausgestaltet. Insbesondere kühlt die Kühleinrichtung das Aggregat über zumindest einen Flüssigkeits-Kühlkreis und weist die Kühleinrichtung einen Wärmetauscher auf, über den die Wärme von der Kühlflüssigkeit auf Kühlluft in dem Kühlturm übertragen wird.

Durch die etwa mittige Anordnung der Kühleinrichtung kann weiter Platz gespart werden und die Kühlkreisläufe können vereinfacht werden. Insbesondere reicht wegen der kompakten Bauweise und Anordnung des Aggregats eine einzige Kühleinrichtung zum Kühlen des Aggregats aus, welche bedarfsweise auch durch redundante Kühleinheiten realisierbar ist. Im Fall von redundanten Kühleinheiten sind z.B. zwei Ventilatoren und zwei Kühlerblöcke vorhanden.

Wie oben bereits erwähnt, kann das Aggregat für unterschiedliche Betriebsarten bzw. für Schienenwege mit und ohne Elektrifizierung ausgestaltet sein. Insbesondere kann die o.g. Gruppe von Aggregat-Typen eine Untergruppe aufweisen, bestehend aus verschiedenen Stromwandler-Hochspannungsgerüst-Kombinationen. Je nach Anforderung an die Eigenschaften einer Elektrolokomotive kann aus dieser Untergruppe eine geeignete Stromwandler-Hochspannungsgerüst-Kombination ausgewählt werden. Die verschiedenen Stromwandler-Hochspannungsgerüst-Kombinationen sind für den Betrieb von Lokomotiven an verschiedenen Stromversorgungsnetz-Spannungen und/oder Spannungsarten (DC, AC mit unterschiedlichen Frequenzen) ausgestaltet, wobei zumindest eine bestimmte der Stromwandler-Hochspannungsgerüst-Kombinationen auch für den Betrieb an mehreren Stromversorgungsnetz-Spannungen und/oder Spannungsarten ausgestaltet sein kann. Somit ist eine Lokomotive beispielsweise für den Betrieb sowohl an einem Gleichspannungsnetz als auch an einem Wechselspannungsnetz geeignet oder für den Betrieb an Wechselspannungsnetzen mit verschiedenen Nennspannungen und/oder Frequenzen.

Zumindest ein Teil der zusätzlichen Vorrichtungen kann im ersten Fall und im zweiten Fall im Wesentlichen gleich ausgestaltet sein. Die zusätzlichen Vorrichtungen, die für den Betrieb der Lokomotive und/oder für den Betrieb von Wagen ausgestaltet sind, können ebenfalls für den ersten Fall und für den zweiten Fall an derselben Stelle der tragenden Fahrzeugkonstruktion der Lokomotive angeordnet sein und/oder (zumindest ein Teil davon) im Wesentlichen gleich ausgestaltet sein. Kleinere Modifikationen sind im ersten und im zweiten Fall möglich, z. B. hinsichtlich von spezifischen Anschlüssen und/oder Schnittstellen zwischen der jeweiligen Vorrichtung und dem Aggregat. Insbesondere können die Vorrichtungen, die speziell für einen bestimmten Aggregat-Typ ausgestaltet sind zu einer einzigen Baugruppe zusammengefasst werden.

Bei den zusätzlichen Vorrichtungen handelt es sich beispielsweise um beliebige Kombinationen der folgenden Einrichtungen: elektrische Einrichtung für die Stromversorgung (z. B. so genannte Niederspannungs-Gerüste für den Antrieb der Lokomotive und/oder für Hilfseinrichtungen), Bremswiderstände zur Dissipation von elektrischer Energie in Wärme, Steuereinrichtung, Sicherungseinrichtung zur Sicherung des Fahrbetriebes, Kühleinrichtung, Stromwandler, Umrichter, Transformator, Kompressor zum Komprimieren von Gasen (z. B. zur Erzeugung von Druckluft für eine Bremsanlage) und/oder eine Feuerlöscheinrichtung.

Die folgende Ausgestaltung ist besonders Platz sparend und reduziert die Kosten der Montage, der Herstellung und des Einkaufs weiter: An der tragenden Fahrzeugkonstruktion sind Befestigungseinrichtungen zum wahlweisen Befestigen eines Kraftstofftanks oder eines Transformators im Bereich eines Untergestells der Lokomotive vorgesehen. Im ersten Fall wird der Kraftstofftank, im zweiten Fall wird der Transformator mit den Befestigungseinrichtungen an der tragenden Konstruktion befestigt. Dabei liegen die Befestigungseinrichtungen vorzugsweise so, dass der Tank bzw. der Transformator unterhalb des Aggregats angeordnet wird.

Teil der Erfindung ist auch eine entsprechend ausgestaltete tragende Fahrzeugkonstruktion für eine Lokomotive. Die Fahrzeugkonstruktion weist einen Boden mit einer Durchführungsöffnung auf, wobei die Fahrzeugkonstruktion erste Befestigungseinrichtungen zum wahlweisen Befestigen eines Kraftstofftanks oder eines Transformators unterhalb des Bodens im Bereich eines Untergestells der Lokomotive aufweist. Die Fahrzeugkonstruktion weist ferner zweite Befestigungseinrichtungen zum wahlweisen Befestigen einer Motor-Generator-Kombination (erster Fall) oder einer Stromwandler-Hochspannungsgerüst-Kombination (zweiter Fall) oberhalb des Bodens auf.

Die Erfindung umfasst ferner die Lokomotive in der jeweiligen Ausführung, die das unmittelbare Ergebnis des erfindungsgemäßen Herstellungsverfahrens in einer seiner Ausgestaltungen ist. Insbesondere ist daher eine Lokomotive Teil der Erfindung, die als Aggregat die Stromwandler-Hochspannungsgerüst-Kombination aufweist, wobei die Stromwandler-Hochspannungsgerüst-Kombination bezüglich einer horizontal verlaufenden Richtung, die senkrecht zur Fahrtrichtung der Lokomotive steht, mittig in der Lokomotive angeordnet ist und wobei das Aggregat als ungeteilte Einheit ausgestaltet ist. Die Erfindung umfasst auch mehrere Lokomotiven, die sich in der bereits beschriebenen Weise im Wesentlichen durch das Antriebsaggregat unterscheiden und bei denen die tragende Konstruktion und die weiteren Vorrichtungen weitgehend gleich ausgestaltet sind.

Insbesondere können die Lokomotiven jeweils eine tragende Fahrzeugkonstruktion und ein damit verbundenes Aggregat aufweisen, wobei das Aggregat ausgestaltet ist, eine Antriebsleistung aus einer Energiequelle bereitzustellen und wobei das Aggregat wahlweise aus der Gruppe, bestehend aus zumindest einer Motor-Generator-Kombination, insbesondere einem dieselelektrischen Aggregat, und aus zumindest einer Stromwandler-Hochspannungsgerüst-Kombination ausgewählt ist, sodass entweder die Motor-Generator-Kombination (erster Fall) oder die Stromwandler-Hochspannungsgerüst-Kombination (zweiter Fall) als das Aggregat mit der tragenden Fahrzeugkonstruktion verbunden ist.

Entsprechend dem oben beschriebenen Herstellungsverfahren kann die Stromwandler-Hochspannungsgerüst-Kombination als das Aggregat mit der tragenden Fahrzeugkonstruktion verbunden sein und kann die Stromwandler-Hochspannungsgerüst-Kombination als ein ungeteilter Block (in dem oben beschriebenen Sinn) an der tragenden Fahrzeugkonstruktion angeordnet sein.

Ferner gehört zum Umfang der Erfindung eine Montageanordnung, d. h. eine Menge von Einrichtungen und Bauteilen, die bei der Montage von Lokomotiven verbaut werden. Bei der Montage einer bestimmten Lokomotive kann bei manchen Montageschritten eine Auswahl aus verschiedenen Typen der Einrichtungen und Bauteile getroffen werden. Die Montageanordnung zur Montage von Lokomotiven weist eine Vielzahl von tragenden Fahrzeugkonstruktionen auf, die ausgestaltet sind, jeweils als tragende Konstruktion für eine einzige Lokomotive zu dienen. Die tragenden Fahrzeugkonstruktionen sind identisch ausgestaltet. Die Anordnung weist ferner zumindest zwei verschiedene Typen von Aggregaten auf, die ausgestaltet sind, beim Betrieb der Lokomotive aus einer Energiequelle eine Antriebsleistung zu erzeugen. Zumindest ein Typ ist eine Motor-Generator-Kombination. Zumindest ein anderer Typ ist eine Stromwandler-Hochspannungsgerüst-Kombination. Die tragenden Fahrzeugkonstruktionen und die Aggregate sind derart ausgestaltet, dass jede der Fahrzeugkonstruktionen wahlweise entweder mit einer der Motor-Generator-Kombinationen (erster Fall) oder einer der Stromwandler-Hochspannungsgerüst-Kombinationen (zweiter Fall) als Aggregat ausgestattet werden kann, wobei das jeweilige Aggregat an derselben Position mit der tragenden Fahrzeugkonstruktion verbunden werden kann.

Entsprechend den Ausgestaltungen des bereits beschriebenen Herstellungsverfahrens kann die Montageanordnung weitere Einrichtungen und Bauteile aufweisen. Insbesondere kann für jede der Lokomotiven eine selbsttragende Kabel-Nerrohrungseinheit vorgesehen sein, die nicht wesentlich zur Fahrzeugstabilität beiträgt, aber selbsttragend (also eigenstabil) ist.

Ein besonders bevorzugtes Ausführungsbeispiel der Erfindung wird nun unter Bezugnahme auf die beigefügte Zeichnung beschrieben. Die einzelnen Figuren der Zeichnung zeigen:
- Fig. 1: eine schematische Ansicht von oben auf den Innenraum einer Lokomotive mit dieselelektrischem Antriebsaggregat,
- Fig. 2: eine schematische Ansicht von oben auf den Innenraum einer Elektro-Lokomotive,
- Fig. 3: eine schematische Darstellung eines Verfahrensschritts bei der Herstellung einer Lokomotive,
- Fig. 4: eine seitliche Ansicht einer Anordnung mit einem Antriebsaggregat und einer zugeordneten Einrichtung in einer dieselelektrischen Lokomotive
- Fig. 5: eine seitliche Ansicht einer Anordnung mit einem Antriebsaggregat und einer zugeordneten Einrichtung in einer elektrischen Lokomotive,
- Fig. 6: eine perspektivische Explosionsdarstellung einer dieselelektrischen Lokomotive, wobei außer dem Antriebsaggregat und einem zugeordneten Kühlturm alle weiteren Einrichtungen des Maschinenraums weggelassen wurden,
- Fig. 7: eine perspektivische Explosionsdarstellung einer elektrischen Lokomotive, wobei außer dem Antriebsaggregat und einem zugeordneten Kühlturm alle weiteren Einrichtungen des Maschinenraums weggelassen wurden,
- Fig. 8: eine Teildarstellung eines Längsträgers am Boden des Maschinenraums in einem Bereich, in dem der Längsträger zwei parallel zueinander verlaufende Trägerelemente aufweist, auf die das Antriebsaggregat aufgesetzt wird bzw. ist,
- Fig. 9: eine Ansicht von oben auf den in Fig. 8 dargestellten Bereich,
- Fig. 10: einen Querschnitt durch den in Fig. 8 dargestellten Bereich, der eine Querstrebe zeigt und
- Fig. 11: eine Seitenansicht auf den in Fig. 8 dargestellten Bereich.

Die in Fig. 1 dargestellte Lokomotive weist ein Antriebsaggregat DE auf, das aus Dieselkraftstoff elektrische Antriebsleistung erzeugt. Hierzu weist das Aggregat DE einen Motor MOT und einen von dem Motor MOT angetriebenen Generator GEN auf. Es können an sich bekannte Aggregat-Typen verwendet werden. Der Motor MOT ist in einem separaten Abteil der Lokomotive angeordnet. Der Zugang zu dem Abteil wird über Türen ermöglicht.

Fig. 2 zeigt eine Lokomotive, bei der an dem Ort, an dem bei der zuvor beschriebenen Lokomotive das dieselelektrische Aggregat DE angeordnet ist, ein elektrisches Aggregat EP angeordnet ist. Das Aggregat EP ist als kompakter Block ausgestaltet, der mehrere Einrichtungen enthält: einen ersten Stromrichter, der der Erzeugung von elektrischer Antriebsleistung für Antriebsmotoren im vorderen Lokomotiventeil dient, einen zweiten Stromrichter, der der Erzeugung von elektrischer Antriebsleistung für Antriebsmotoren im hinteren Lokomotiventeil dient, und zumindest ein Hochspannungsgerüst mit elektrischen Leitungsverbindungen im Hochspannungsteil der elektrischen Einrichtungen des Aggregats EP, insbesondere für den Bezug von elektrischer Energie aus einem lokomotivenexternen Stromversorgungsnetz über einen Stromabnehmer. Es können weitere Einrichtungen in dem Aggregat EP vorgesehen sein, z.B. weitere Stromrichter, die weiteren Antriebsmotoren zugeordnet sind, zumindest ein zweites Hochspannungsgerüst (wobei sich die verschiedenen Hochspannungsgerüste dadurch unterscheiden können, dass es sich bei einem bestimmten Gerüst z.B. um ein Gleichspannungsgerüst handeln kann und bei einem anderen Gerüst z.B. um ein Wechselspannungsgerüst handeln kann, damit ein Betrieb sowohl an Gleichspannungs-Stromversorgungsnetzen als auch an Wechselspannungs-Stromversorgungsnetzen möglich ist), Filter- und/oder Dämpfungseinrichtungen zur Vermeidung von unerwünschten Schwingungen in den elektrischen Leitungen und im externen Stromnetz und/oder eine Zugsammelschiene, die der Hochspannungsversorgung für einen Zugverband dient, der an die Lokomotive angekoppelt ist und/oder elektrische Filtereinrichtungen zum Filtern von Störsignalen. Derartige Filtereinrichtungen sind elektrisch z. B. im Gleichspannungs-Zwischenkreis und/oder im Hochspannungsteil angeordnet.

Erfindungsgemäß sind die weiteren in Fig. 1 und Fig. 2 dargestellten Vorrichtungen (die zusätzlichen Vorrichtungen) unabhängig von der Art des Antriebsaggregats an derselben Stelle der Lokomotive angeordnet und (mit einer Ausnahme, die noch beschrieben wird) in gleicher Weise ausgestaltet. In allen Fällen muss lediglich das Antriebsaggregat mit den jeweils daran anzuschließenden Vorrichtungen verbunden werden, sei es elektrisch, mechanisch, hydraulisch und/oder in anderer Weise. Insbesondere liefert das Antriebsaggregat den Betriebsstrom für die Antriebsmotoren, die im Bereich der Drehgestelle der Lokomotive angeordnet sind (nicht dargestellt in Fig. 1 und Fig. 2). Außerdem wird das jeweilige Antriebsaggregat an die Kühleinrichtung KT angeschlossen. Auch muss die entsprechende Elektrik zur Steuerung des Betriebes des Antriebsaggregats angeschlossen werden.

Die oben, vor der Figurenbeschreibung genannten zusätzlichen Vorrichtungen können z. B. aus einer der folgenden Einrichtungen oder aus einer beliebigen Kombination der folgenden Einrichtungen bestehen. Dabei wird in der folgenden Aufzählung bereits Bezug auf die Figuren 1 und 2 genommen, um eine mögliche Ausgestaltung zu erläutern:
- ein Hilfsbetriebegerüst (z. B. integriert in Block AUX) mit Hilfsvorrichtungen, die dem Betrieb von Einrichtungen dienen, welche nicht unmittelbar für den Antrieb der Lokomotive erforderlich sind,
- ein Niederspannungsgerüst (NSG) zur elektrischer Versorgung von Hilfsvorrichtungen, die dem Betrieb von Einrichtungen dienen, welche nicht unmittelbar für den Antrieb der Lokomotive erforderlich sind, und/oder von anderen Vorrichtungen,
- eine Feuerlöscheinrichtung (FLE),
- ein Bremswiderstand (BW) in dem Bremsenergie der Lokomotive dissipiert werden kann,
- ein Elektronikblock (ES) mit elektronischen und/oder mikroelektronischen Vorrichtungen zur Steuerung des Betriebs der Lokomotive,
- zumindest eine Antriebsmotor-Kühleinrichtung (MLT),
- ein oder mehrere Hilfsbetriebeumrichter (HBU) mit einem Umrichter zu elektrischer Versorgung von Hilfsvorrichtungen, die dem Betrieb von Einrichtungen dienen, welche nicht unmittelbar für den Antrieb der Lokomotive erforderlich sind, und/oder von anderen Vorrichtungen,
- eine Aggregat-Kühleinrichtung (KT) zur Kühlung des Aggregats,
- ein Luftgerüst (LG) mit Einrichtungen, die der Erzeugung und Speicherung von Druckluft für eine Bremsanlage dienen, und
- eine oder mehrere Zugsicherungseinrichtungen (ZSS) zur Gewährleistung eines sicheren Fahrbetriebes.

In dem konkreten Ausführungsbeispiel, das anhand der Figuren beschrieben wird, sind alle diese Vorrichtungen im ersten Fall und im zweiten Fall an gleicher Stelle des Wagenkastens (d. h. der tragenden Fahrzeugkonstruktion der Lokomotive) angeordnet und sind im Wesentlichen gleich ausgestaltet oder sogar identisch ausgestaltet.

Die (mit Ausnahme des Antriebsaggregats und der Baugruppe AUX, s.u.) baugleichen Lokomotiven, die in Fig. 1 und Fig. 2 dargestellt sind, weisen jeweils in Fahrtrichtung vorne und in Fahrtrichtung hinten einen Führerraum mit einem Führertisch FT1 bzw. FT2 auf. Der Führerraum wird durch eine Rückwand mit Führerraumrückwandschränken FRS1, FRS2 bzw. FRS3, FRS4 gegen den Mittelteil der Lokomotive abgetrennt. Dem Führerraum unmittelbar benachbart erkennt man Fahrmotorlüftertürme MLT1 bzw. MLT4. In Fahrtrichtung neben diesen Lüftertürmen, jedoch durch einen Mittelgang getrennt, befindet sich am einen Führerraum ein Elektronikschrank ES zur Aufnahme diverser elektronischer und mikroelektronischer Einrichtungen, die für den Betrieb der Lokomotive eingesetzt werden, und am anderen Führerraum ein Niederspannungsgerüst NSG, das insbesondere der Verteilung von elektrischen Strömen im Niederspannungsbereich für die in der Lokomotive angeordneten Hilfsvorrichtungen dient.

Den Einrichtungen ES und NSG unmittelbar benachbart ist ein weiterer Fahrmotorlüfterturm MLT2 bzw. MLT3 am einen und anderen Ende des Lokomotiven-Mittelteils.

In Fahrtrichtung vor dem Lüfterturm MLT4 (ohne Beschränkung der Allgemeinheit wird der Führertisch FT1 als in Fahrtrichtung vorne liegend definiert) ist ein Block AUX mit Hilfsvorrichtungen durch einen Mittelgang von dem Lüfterturm MLT3 getrennt. Gegenüber vorbekannten Lösungen wurden in diesem Block AUX ein Hilfsbetriebegerüst zum Betreiben verschiedener Hilfsvorrichtungen, die dem Betrieb des jeweiligen Aggregats der Lokomotive dienen, sowie entsprechende Hilfsbetriebeumrichter und ebenfalls für die Hilfsbetriebe benötigte Transformatoren zusammengefasst (d.h. integriert).

Von dem Block AUX auf der gegenüberliegenden Seite des bereits genannten Mittelganges sind in Fahrtrichtung von hinten nach vorne zunächst eine Feuerlöscheinheit FLE und ein Bremswiderstand BW angeordnet.

Im weiteren Verlauf in Fahrtrichtung nach vorne gabelt sich der Mittelgang auf in zwei außen liegende seitliche Gänge, die an dem Antriebsaggregat EP bzw. DE vorbeiführen.

In Fahrtrichtung vor dem Antriebsaggregat EP bzw. DE grenzt an dieses ein Kühlturm KT an, der der Kühlung des Antriebsaggregats dient.

In Fahrtrichtung vor dem Kühlturm KT geht einer der beiden seitlichen Gänge wieder in einen zweiten Mittelgang über. Auf der in Fahrtrichtung nach vorne gesehen linken Seite des zweiten Mittelganges befindet sich zunächst eine Zugsicherungseinheit ZSS mit Zugsicherungseinrichtungen, die den sicheren, unfallfreien Betrieb der Lokomotive auf Schienenwegen sichern. Unmittelbar an die Zugsicherungseinrichtung ZSS angrenzend in Fahrtrichtung nach vorne befindet sich der bereits erwähnte Motorlüfterturm MLT2. Auf der gegenüberliegenden Seite des zweiten Mittelganges befindet sich an den Kühlturm KT angrenzend ein Luftgerüst LG (mit einem Luftgerüstelektronikschrank LGES), das der Erzeugung und Speicherung der Druckluft für die Bremsanlage dient. In Fahrtrichtung nach vorne grenzt an das Luftgerüst LG der bereits erwähnte Fahrmotorlüfterturm MLT1 an.

Wegen der unterschiedlichen Funktionsweise der verschiedenen Aggregate, die in der Lokomotive verbaut werden können, wird es in der Regel einige Vorrichtungen geben, die speziell für einen bestimmten Aggregat-Typ ausgestaltet sind. Diese sogenannten spezifischen Vorrichtungen werden (wie bereits oben erwähnt) vorzugsweise vollständig in dem Einrichtungsblock AUX angeordnet. Dies hat den Vorteil, dass außer dem Block AUX keine andere Vorrichtung speziell an das Aggregat angepasst werden muss bzw. abhängig von der Wahl des Aggregats ausgewählt werden muss. Der Block AUX kann z. B. vor dem Einbringen in die Lokomotive komplett fertig gestellt werden.

Da sich die Feuerlöscheinheit FLE unabhängig von der Art des Antriebsaggregats an derselben Stelle der Lokomotive bzw. an derselben Stelle der tragenden Konstruktion befindet, können die Feuerlöschleitungen in gleicher Weise verlegt werden. Insbesondere ist es möglich, diese Leitungen und/oder andere Leitungen auf dem Boden und/oder in einem hohlen Boden (z. B. doppelten Boden) des Lokomotiven-Innenraums zu verlegen. Andere Leitungen sind z. B. elektrische Leitungen, hydraulische Leitungen, Gasleitungen, Leerrohre und/oder Führungen zum nachträglichen Einbringen von Leitungen.

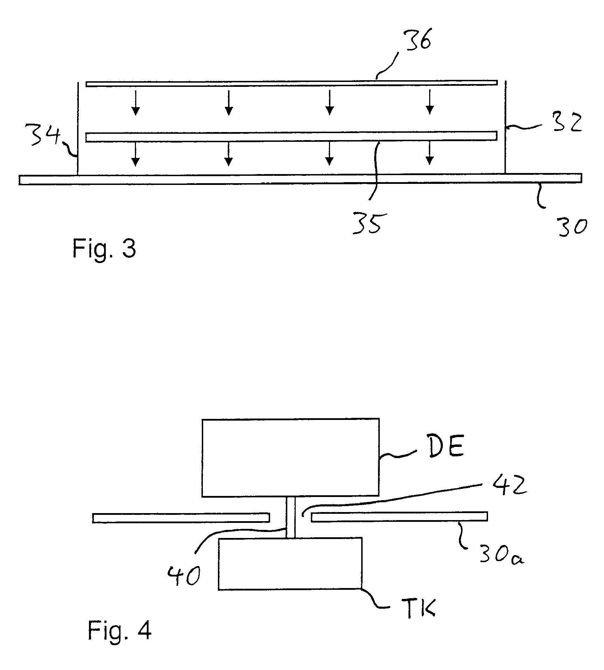

Bei einer bevorzugten Ausführungsform wird ein standardisiertes und vorgefertigtes Leitungsgelege mit einer oder mehreren der genannten Leitungsarten auf den eigentlichen Lokomotivenboden gelegt und anschließend ein zweiter Boden auf dem Leitungsgelege verlegt. Der entsprechende Verfahrensschritt bei der Herstellung der Lokomotive wird anhand von Fig. 3 erläutert. Darin bezeichnet das Bezugszeichen 30 den eigentlichen Lokomotivenboden, der anders als dargestellt auch Aussparungen und Durchführungen aufweisen kann. Senkrecht nach oben von dem Lokomotivenboden 30 erstrecken sich eine erste und eine zweite Führerraumrückwand 32, 34 vorne und hinten an der Lokomotive, wobei die beschriebene Anordnung auch unterhalb einer z.B. nachträglich montierbaren Führerraumrückwand angeordnet werden kann, also bis in den Führerraum hineinragt.

Der eigentliche Lokomotivenboden kann insbesondere die tragende Konstruktion sein oder zumindest einen wesentlichen Teil der tragenden Konstruktion bilden.

Zur Herstellung der Leitungen wird das Leitungsgelege 35 auf den Boden 30 gelegt. Zusätzliche, nicht dargestellte Abstützungen können vorgesehen sein, um den anschließend auf das Leitungsgelege 35 aufgebrachten zweiten Boden 36 nach unten abzustützen. Dadurch wird das Leitungsgelege 35 ganz oder teilweise von dem Gewicht des zweiten Bodens 36 und weiteren Belastungen entlastet. Das Leitungsgelege 35 oder Teile davon können daher in Leichtbauweise gefertigt werden.

Vorzugsweise werden alle benötigten Leitungen, zumindest alle elektrischen Leitungen, auf die anhand von Fig. 3 beschriebene Weise oder auf andere Weise im Bereich des Bodens verlegt, sodass keine Leitungen mehr in den Außenwänden verlegt werden müssen. Eine Verlegung in den Außenwänden hat sich in der Vergangenheit als arbeitsaufwändig erwiesen. Die erfindungsgemäße, immer gleiche Inneneinrichtung der Lokomotive gestattet es dagegen, standardisierte Leitungen zu verwenden, sodass eine Verlegung im Bereich des Bodens möglich ist. Eine solche Verlegung ist einfacher herzustellen. Der Anschluss der jeweiligen Vorrichtungen im Innenraum der Lokomotive an die zugeordneten Leitungen und/oder das Einbringen der eigentlichen Leitungen in die dafür vorgesehenen Hohlrohre und/oder Führungen kann vorgenommen werden, wenn die Vorrichtungen bereits im Innenraum angeordnet sind.

Ein weiterer Vorteil der Verlegung der Leitungen im Bereich des Bodens besteht darin, dass keine Leitungen von der einen Seite der Lokomotive zu anderen Seite der Lokomotive entlang der Führerraumrückwände verlegt werden müssen. Auch eine derartige Verlegung hat sich als aufwändig erwiesen. Außerdem führt die Verlegung über die Rückwände zu unnötig langen Leitungen. Durch die Verlegung im und/oder am Boden können die Leitungen kürzer ausgestaltet werden.

Die in Fig. 4 dargestellte Anordnung zeigt einen Teil des Bodens 30a der Lokomotive, der beispielsweise wie der Boden 30 (Fig. 3) ausgestaltet werden kann. Auch können zusätzlich das Leitungsgelege 35 und der zweite Boden 36 als Teile des Bodens 30a vorhanden sein.

Wenn entschieden ist, welcher Aggregat-Typ in der Lokomotive angeordnet werden soll, wird einerseits das Aggregat, z. B. das Aggregat DE gemäß Fig. 1 oder das Aggregat DE gemäß Fig. 2, auf oder über dem Boden 30a angeordnet und befestigt und wird andererseits eine zugehörige Einrichtung unterhalb des Bodens 30a angeordnet und befestigt. In Fig. 4 ist als Beispiel das Aggregat DE dargestellt.

Die zugehörige Einrichtung wird für den Betrieb des Aggregats benötigt. Weist das Aggregat eine Brennkraftmaschine auf (z. B. einen Dieselmotor) handelt es sich bei der zugehörigen Einrichtung um einen Tank (in Fig. 4 mit TK bezeichnet) zur Aufnahme von Kraftstoff. Wenn das Aggregat ein Aggregat für eine Elektro-Lokomotive ist, handelt es sich bei der zugehörigen Einrichtung z. B. um einen Transformator.

In allen Fällen sind die zusätzliche Einrichtung und das Aggregat über eine Leitungsverbindung 40 miteinander verbunden, die sich durch eine Aussparung 42 und/oder eine Durchführung des Bodens 30a hindurch erstreckt. Im Fall des Tanks TK handelt es sich bei der Leitung zumindest um eine Kraftstoffleitung, im Fall des Transformators um elektrische Leitungen.

Insbesondere kann die tragende Konstruktion einen sich in Längsrichtung (Fahrtrichtung) der Lokomotive erstreckenden Längsträger aufweisen, der im Bereich des Aggregats durch zwei etwa in Längsrichtung verlaufende Trägerelemente gebildet ist. Die Trägerelemente gehen in Längsrichtung sowohl vor als auch hinter dem Aggregat in einen Bereich des Längsträgers über, in dem der Längsträger (betrachtet horizontal quer zur Längsrichtung) in der Mitte des Maschinenraum-Bodens angeordnet ist. Die Trägerelemente weisen vorzugsweise jeweils Auflagezonen auf, die der Einleitung der Gewichtskräfte des Aggregats dienen, d. h. das Aggregat wird in den Auflagezonen auf die Trägerelemente aufgesetzt. Dabei unterscheiden sich die Orte der Auflagezonen im Fall der dieselelektrischen Lokomotive und der elektrischen Lokomotive nicht. Anders ausgedrückt wird das jeweilige Aggregat an den Auflagezonen auf die Trägerelemente aufgesetzt. Vorzugsweise sind alle Aggregate, die wahlweise aufgesetzt werden können, so ausgestaltet, dass sie für die Auflagezonen entsprechende, nach unten weisende Vorsprünge aufweisen. Auf diese Weise wird gewährleistet, dass das jeweilige Aggregat ausschließlich an den Auflagezonen seine Gewichtskräfte in den Längsträger einleitet. Die Vorsprünge weisen daher untereinander dieselben Abstände auf wie die Auflagezonen. Im Bereich der Auflagezonen und im Bereich der Vorsprünge können zur Befestigung z. B. Gewindebohrungen und Löcher zum Durchführen jeweils eines Schraubenschaftes vorgesehen sein, so dass die Vorsprünge an den Auflagezonen festgeschraubt werden können.

Im Folgenden wird ein besonders bevorzugtes Ausführungsbeispiel beschrieben: Die Trägerelemente können durch zwei Querstreben miteinander verbunden sein. Die tragende Konstruktion des Fahrzeugkastens ist ein hochdynamisch belastetes Bauelement, welches hinsichtlich der mechanischen Beanspruchung mehrere Funktionen übernimmt. Insbesondere aufgrund der in Fahrtrichtung vor und hinter dem Haupttransformator bzw. Tank verlaufenden Querstreben, ist die tragende Konstruktion dazu in der Lage, verschiedenste Belastungsarten gleichzeitig zu übernehmen. Hierzu zählen (a), wie bereits erwähnt, das Aufnehmen der Gewichtskräfte des im Maschinenraum angeordneten Antriebsaggregats und des unterflur an den Längsträger gehängten Transformators oder Tanks, (b) Zug- und Bremskräfte, die über eine Verbindung des Längsträgers mit den Drehgestellen eingeleitet werden, (c) daraus resultierende Torsionsmomente. Insbesondere können z. B. beim Rangieren von Zugverbänden hohe Beschleunigungskräfte wirken (bei Stößen z. B. Beschleunigungen in Längsrichtung in der Größenordnung der dreifachen Erdbeschleunigung).

Die geteilte Konstruktion mit den beiden Trägerelementen kann bei der dieselelektrischen Lokomotive außerdem zum Tragen einer sogenannten Umweltwanne genutzt werden, die von dem darüber angeordneten dieselelektrischen Aggregat abtropfende Flüssigkeiten auffängt. Bei der E-Lok ist der Boden des Maschinenraums zwischen den beiden Trägerelementen z. B. durch ein Bodenblech geschlossen. In beiden Fällen können jedoch Öffnungen bzw. Durchführungen in dem Bodenblech bzw. der Umweltwanne zur Durchführung von Leitungen vorhanden sein, z.B. für Transformatoranschlüsse und unterflur angeordnete Einrichtungen wie Batteriekasten, Druckluftbeschaffungsanlage und Ölrohre.

Bei dem Längsträger in einer der beschriebenen Ausgestaltungen handelt es sich um einen Aspekt der Erfindung, der auch Bestandteil anderer Lokomotiven sein kann als der in dieser Figurenbeschreibung beschriebenen Lokomotiven. Außerdem ist das Konzept der Kombination des Längsträgers mit dem darüber angeordneten Antriebsaggregat und dem unterflur angeordneten Haupttransformator (oder Drosselspulen-Anordnung) bzw. dem Kraftstofftank ein Aspekt der Erfindung, der unabhängig von den anderen Aspekten (wie z. B. der modularen Bauweise der Lokomotive) verwirklicht werden kann.

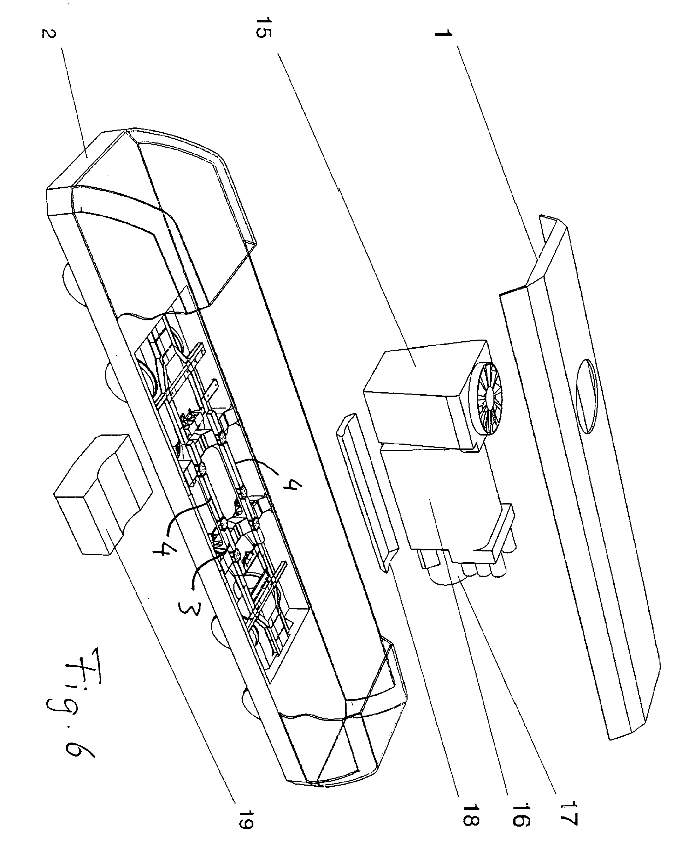

In Fig. 6 ist der Wagenkasten 2 einer dieselelektrisch angetriebenen Lokomotive dargestellt. Man erkennt im Bodenbereich des Wagenkastens 2 den Längsträger 3 mit den beiden in Längsrichtung verlaufenden Trägerelementen 4. Bei der Endmontage der Lokomotive wird der Kraftstofftank 19 unterflur an dem Längsträger 3 befestigt, wird die Umweltwanne 18 zwischen den Trägerelementen 4 angeordnet und an dem Längsträger 3 befestigt, wird das Antriebsaggregat mit dem Dieselmotor 16 und dem daran angeflanschten Generator 17 samt angrenzendem Kühlturm 15 auf den Längsträger 3 aufgesetzt und wird abschließend, nach dem Einbringen aller Großteile in den Maschinenraum, das Dach 1 aufgesetzt.

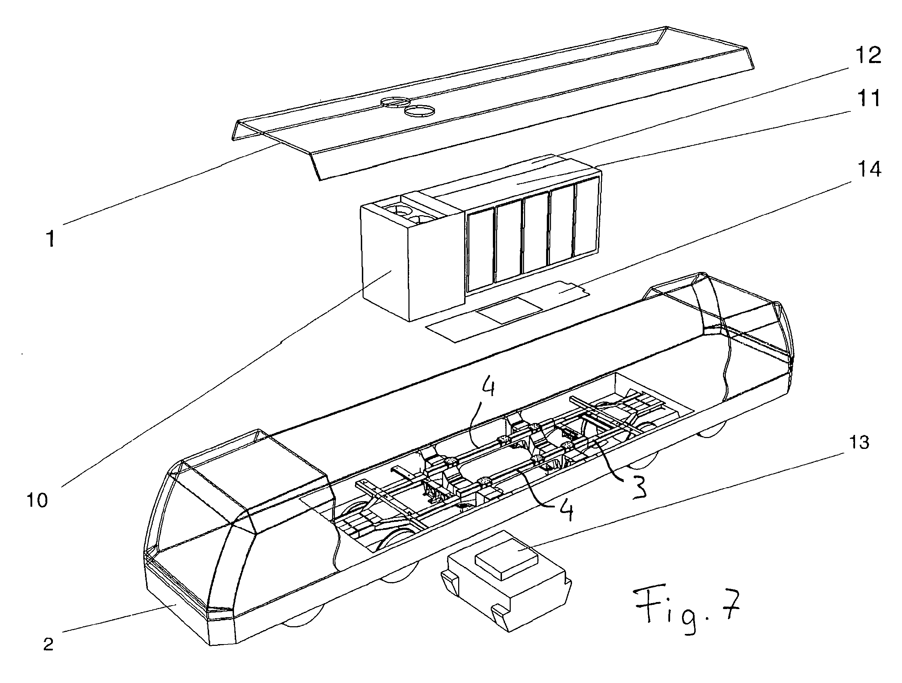

Fig. 7 zeigt eine entsprechende Darstellung für eine elektrische Lokomotive. Der Wagenkasten 2 ist identisch ausgestaltet. Bei der Endmontage wird jedoch der Haupttransformator 13 unterflur an dem Längsträger 3 befestigt, wird das Bodenblech 14 mit den nur teilweise dargestellten Durchführungsöffnungen an dem Längsträger 3 angebracht, wird das Antriebsaggregat mit dem Stromrichter-Bereich 11 und dem Hochspannungs-Bereich 12 sowie dem angrenzenden Kühlturm 10 auf den Längsträger 3 aufgesetzt und wird wiederum nach dem Einbringen sämtlicher Großteile das Dach 1 aufgesetzt, welches sich jedoch von dem Dach für die dieselelektrisch angetriebene Lokomotive unterscheidet.

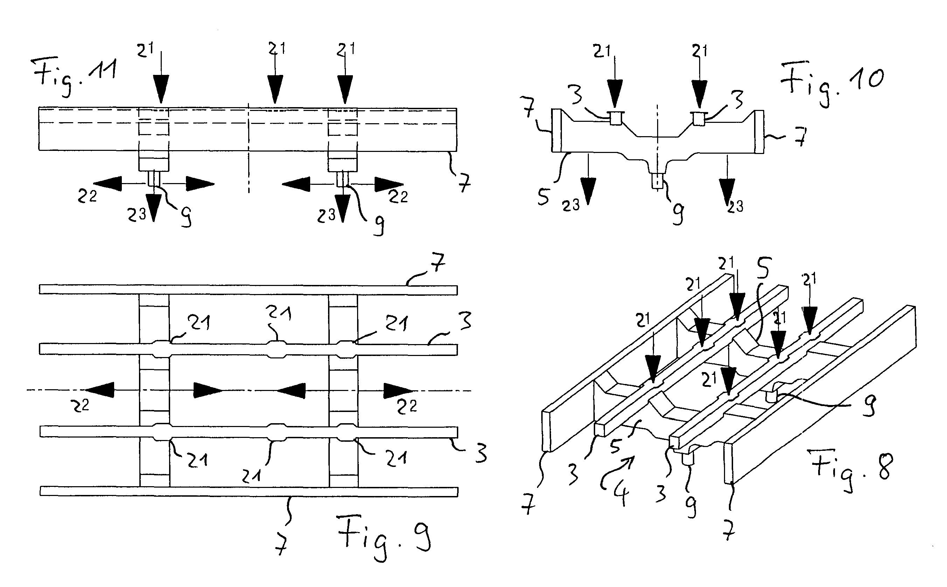

Fig. 8 zeigt den Bereich des Längsträgers 4, der die beiden in Längsrichtung verlaufenden Trägerelemente 3 aufweist. Ferner ist erkennbar, dass in diesem Bereich zwei Querstreben 5 die Längselemente 3 miteinander verbinden. Außerdem führen die Querstreben 5 seitlich über die Position der Trägerelemente 3 hinaus bis zu seitlichen Längselementen 7 des Längsträgers 4, die sich etwa in der seitlichen Position der Seitenwände des Wagenkastens befinden. Die Querstreben sind zum Beispiel aus verschiedenen Metallteilen zusammengeschweißt, wobei die Metallteile jeweils einen Abschnitt der Querstrebe 5 in Querrichtung bilden. Auf diese Weise kann die Querstrebe 5 seitlich außerhalb der Position der Längselemente 3 auf einem höheren Niveau verlaufen als in dem mittleren Bereich zwischen den Längselementen 3. Außerdem können so oben offene Ausnehmungen in den Querstreben 5 gebildet sein, in denen jeweils eines der Längselemente 3 teilweise aufgenommen ist. Die Gestaltung einer der Querstreben 5 erkennt man gut aus Fig. 10.

Aus den Fig. 8 bis 11 sind außerdem insgesamt sechs Auflagezonen 21 erkennbar, die durch die obere Oberfläche der beiden Trägerelemente 3 gebildet werden. Durch zusätzliche, von oben nach unten weisende Pfeile ist dargestellt, dass die Gewichtskräfte des jeweils auf den Trägerelementen 3 aufliegenden Antriebsaggregats in den Auflagezonen 21 aufgenommen werden. Jedes der beiden Trägerelemente 3 weist drei der Auflagezonen 21 auf, wobei die Auflagezonen 21 paarweise in Längsrichtung betrachtet an derselben Längsposition liegen. Zwei der Auflagezonen 21 der Trägerelemente 3 befinden sich unmittelbar oberhalb einer der Querstreben 5.

Fig. 8, 10 und 11 zeigen ferner, dass jede der Querstreben 5 an ihrer Unterseite und (betrachtet in Querrichtung) in der Mitte einen Verbindungsbereich 9 zum Verbinden der Querstrebe mit dem nächst benachbarten Drehgestell aufweist. Die Drehgestelle sind in Fig. 6 und 7 teilweise dargestellt, nicht aber die Diagonalverbindung (schräg nach unten zu dem Drehgestell verlaufende) von dem Drehgestell zu dem Verbindungsbereich 9. Außerdem können die Verbindungsbereiche 9 zum Anbringen hängender Lasten unterflur genutzt werden. Die an den Verbindungsbereichen 9 nach vorne in Längsrichtung und nach unten wirkenden Kräfte bzw. Kraftkomponenten sind in Fig. 11 dargestellt und mit den Bezugszeichen 22, 23 bezeichnet. Die in Längsrichtung wirkenden Kräfte 22 sind auch in Fig. 9 dargestellt. In Fig. 10 ist dargestellt, dass in vertikaler Richtung nach unten wirkende Kräfte 23 auch seitlich weiter außen als die Längselemente 3 unten an den Querstreben 5 angreifen können. An diesen Stellen kann zum Beispiel der unterflur anzuordnende Transformator 13 (Fig. 7) an den Querstreben 5 befestigt werden.

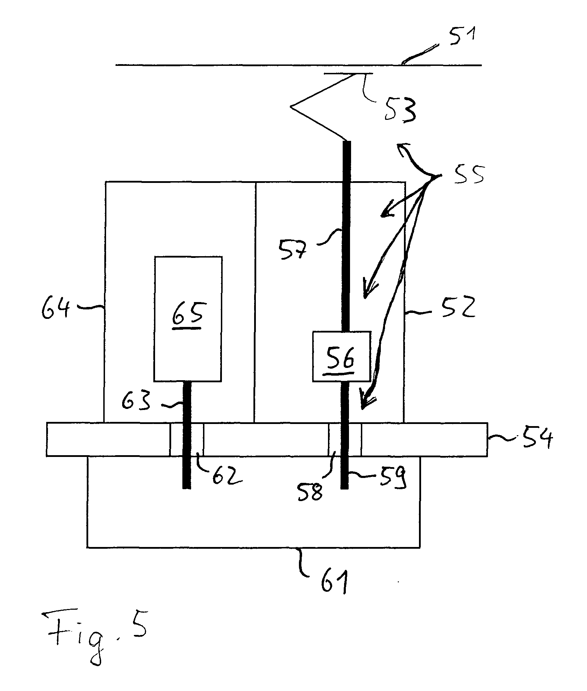

In Fig. 5 ist der Bereich unterhalb und oberhalb des Längsträgers schematisch für den Fall einer E-Lokomotive dargestellt. Die elektrische Energie für die Versorgung der Antriebsmotoren wird von einem Stromabnehmer 53 aus einer Oberleitung 51 entnommen. Der Hochspannungsteil 55 der elektrischen Verschaltung weist außer dem Stromabnehmer 53 einen Hochspannungs-Hauptschalter 56, eine Leitungsverbindung 57 zwischen dem Stromabnehmer 53 und dem Hauptschalter 56 und eine Leitungsverbindung 59 zwischen dem Hauptschalter 56 und dem unterflur angeordneten Haupttransformator 61 auf. Die Leitungsverbindung 59 führt von oben kommend durch eine Öffnung 58 in einem Bodenblech 54 des Maschinenraums hindurch. Der Hauptschalter 56 ist in einem Hochspannungs-Bereich 52 des Antriebsaggregats der E-Lokomotive untergebracht, wobei das Antriebsaggregat sowohl in Längsrichtung als auch horizontal quer zur Längsrichtung in der Mitte des Maschinenraums angeordnet ist.

Unter "Mitte" wird nicht verstanden, dass das Antriebsaggregat exakt zentriert ist. Es wird vielmehr darunter verstanden, dass das Antriebsaggregat in einem mittleren Bereich des Maschinenraums angeordnet ist. Insbesondere kann daher an beiden Seiten des Antriebsaggregats ein in Längsrichtung verlaufender Gang vorhanden sein, wobei aber einer der beiden Gänge breiter als der andere sein kann. Die beiden Gänge erlauben den Zugang von beiden Seiten zu dem Antriebsaggregat.

Der Haupttransformator 61 besitzt außerdem zumindest einen elektrischen Anschluss, den eine Leitungsverbindung 63 mit einem darüber angeordneten Stromrichter 65 verbindet. Der Stromrichter 65 ist ebenfalls Teil des Antriebsaggregats und befindet sich in einem Bereich 64 des Antriebsaggregats. Die Leitungsverbindungen 63 führt ebenfalls durch eine Öffnung 62 (die z. B. wie auch die Öffnung 58 von einer Durchführung ausgefüllt wird) in dem Bodenblech 54 hindurch, von unten (unterflur, wo sich der Haupttransformator 61 befindet) nach oben (in den Maschinenraum). Bei der Öffnung 58 und der Öffnung 62 kann es sich auch um dieselbe Öffnung handeln.

## Patentansprüche

1. Verfahren zum Herstellen einer Mehrzahl von Lokomotiven, wobei bei der Herstellung jeder der Lokomotiven eine tragende Fahrzeugkonstruktion mit
- einem Aggregat (DE, EP) zur Bereitstellung einer Antriebsleistung aus einer Energiequelle und
- mit zusätzlichen Vorrichtungen (AUX, KT), die einen Betrieb der Lokomotive ermöglichen,
verbunden wird,
**dadurch gekennzeichnet, dass**
- das Aggregat (DE, EP) wahlweise aus der Gruppe, bestehend aus zumindest einer Motor-Generator-Kombination, insbesondere einem dieselelektrischen Aggregat, und aus zumindest einer Stromwandler-Hochspannungsgerüst-Kombination ausgewählt wird, sodass entweder die Motor-Generator-Kombination (erster Fall) oder die Stromwandler-Hochspannungsgerüst-Kombination (zweiter Fall) als das Aggregat mit der tragenden Fahrzeugkonstruktion verbunden wird, wobei die Stromwandler-Hochspannungsgerüst-Kombination im zweiten Fall einen Wechselrichter aufweist, von dem aus einer Gleichspannung eine Dreiphasen-Wechselspannung erzeugt wird und der über eine Stromleitung mit zumindest einem Fahrmotor der Lokomotive verbunden ist, und
- dass die Orte, an denen das Aggregat (DE, EP) und die zusätzlichen Vorrichtungen an der tragenden Fahrzeugkonstruktion angeordnet und mit der tragenden Fahrzeugkonstruktion verbunden werden, im ersten Fall und im zweiten Fall gleich sind.

2. Verfahren nach dem vorhergehenden Anspruch, wobei zumindest ein Teil (KT) der zusätzlichen Vorrichtungen (AUX, KT) im ersten Fall und im zweiten Fall im Wesentlichen gleich ausgestaltet ist.

3. Verfahren nach dem vorhergehenden Anspruch, wobei die zusätzlichen Vorrichtungen aus zumindest einer der folgenden Einrichtungen oder aus einer beliebigen Kombination der folgenden Einrichtungen bestehen:
- ein Hilfsbetriebegerüst (HBG) mit Hilfsvorrichtungen, die dem Betrieb von Einrichtungen dienen, welche nicht für den Antrieb der Lokomotive erforderlich sind,
- ein Niederspannungsgerüst (NSG) zur elektrischen Versorgung von Hilfsvorrichtungen, die dem Betrieb von Einrichtungen dienen, welche nicht für den Antrieb der Lokomotive erforderlich sind, und/oder von anderen Vorrichtungen,
- eine Feuerlöscheinrichtung (FLE),
- ein Bremswiderstand (BW) in dem Bremsenergie der Lokomotive dissipiert werden kann,
- ein Elektronikblock (ES) mit elektronischen und/oder mikroelektronischen Vorrichtungen zur Steuerung des Betriebs der Lokomotive,
- zumindest eine Antriebsmotor-Kühleinrichtung (MLT),
- ein Hilfsbetriebeumrichter (HBU) mit einem Umrichter zu elektrischer Versorgung von Hilfsvorrichtungen, die dem Betrieb von Einrichtungen dienen, welche nicht für den Antrieb der Lokomotive erforderlich sind, und/oder von anderen Vorrichtungen,
- eine Aggregat-Kühleinrichtung (KT) zur Kühlung des Aggregats,
- ein Luftgerüst (LG), das der Erzeugung und Speicherung von Druckluft für eine Bremsanlage, und
- zumindest eine Zugsicherungseinrichtung (ZSS) zur Gewährleistung eines sicheren Fahrbetriebes.

4. Verfahren nach einem der vorhergehenden Ansprüche, wobei im zweiten Fall die Stromwandler-Hochspannungsgerüst-Kombination wahlweise aus der Untergruppe, bestehend aus verschiedenen Stromwandler-Hochspannungsgerüst-Kombinationen ausgewählt wird, die für den Betrieb der Lokomotive an verschiedenen Stromversorgungsnetz-Spannungen und/oder -Spannungsarten ausgestaltet sind, wobei zumindest eine bestimmte der Stromwandler-Hochspannungsgerüst-Kombinationen auch für den Betrieb an mehreren Stromversorgungsnetz-Spannungen und/oder -Spannungsarten ausgestaltet sein kann.

5. Verfahren nach einem der vorhergehenden Ansprüche, wobei der Ort, an dem das Aggregat (DE, EP) an der tragenden Fahrzeugkonstruktion angeordnet wird, bezüglich einer horizontal verlaufenden Richtung, die senkrecht zur Fahrtrichtung der Lokomotive steht, mittig in der Lokomotive angeordnet wird.

6. Verfahren nach einem der vorhergehenden Ansprüche, wobei die Stromwandler-Hochspannungsgerüst-Kombination (EP) als ein ungeteilter Block an der tragenden Fahrzeugkonstruktion angeordnet wird.

7. Verfahren nach dem vorhergehenden Anspruch, wobei der ungeteilte Block zumindest einen ersten und einen zweiten Stromrichter aufweist, die mit verschiedenen Antriebsmotoren oder verschiedenen Antriebsmotoren-Gruppen der Lokomotive elektrisch verbunden werden.

8. Verfahren nach einem der vorhergehenden Ansprüche, wobei an der tragenden Fahrzeugkonstruktion Befestigungseinrichtungen zum wahlweisen Befestigen eines Kraftstofftanks (TK) oder eines Transformators im Bereich eines Untergestells der Lokomotive vorgesehen sind und wobei im ersten Fall der Kraftstofftank (TK) mit den Befestigungseinrichtungen befestigt wird und wobei im zweiten Fall der Transformator mit den Befestigungseinrichtungen befestigt wird.

9. Verfahren nach einem der vorhergehenden Ansprüche, wobei eine Kühleinrichtung (KT) zum Kühlen des Aggregats in Fahrtrichtung der Lokomotive unmittelbar vor und/oder hinter dem Aggregat angeordnet wird und wobei die Kühleinrichtung (KT) vorzugsweise als Kühlturm ausgestaltet ist.

10. Montageanordnung zur Montage von Lokomotiven, wobei die Anordnung eine Vielzahl von tragenden Fahrzeugkonstruktionen aufweist, die ausgestaltet sind, jeweils als tragende Konstruktion für eine Lokomotive zu dienen, wobei die tragenden Fahrzeugkonstruktionen identisch ausgestaltet sind, wobei die Anordnung ferner zumindest zwei verschiedene Typen von Aggregaten aufweist, die ausgestaltet sind, beim Betrieb der Lokomotive aus einer Energiequelle eine Antriebsleistung zu erzeugen, wobei zumindest ein Typ eine Motor-Generator-Kombination ist und wobei zumindest ein anderer Typ eine Stromwandler-Hochspannungsgerüst-Kombination ist, wobei die Stromwandler-Hochspannungsgerüst-Kombination einen Wechselrichter aufweist, von dem aus einer Gleichspannung eine Dreiphasen-Wechselspannung erzeugt wird und der über eine Stromleitung mit zumindest einem Fahrmotor der Lokomotive verbunden ist, und wobei die tragenden Fahrzeugkonstruktionen und die Aggregate derart ausgestaltet sind, dass jede der Fahrzeugkonstruktionen wahlweise entweder mit einer der Motor-Generator-Kombinationen (erster Fall) oder einer der Stromwandler-Hochspannungsgerüst-Kombinationen (zweiter Fall) als Aggregat ausgestattet werden kann, wobei das jeweilige Aggregat an derselben Position mit der tragenden Fahrzeugkonstruktion verbunden werden kann.

11. Tragende Fahrzeugkonstruktion für eine Lokomotive, wobei die Fahrzeugkonstruktion einen Boden mit einer Durchführungsöffnung (42) aufweist, wobei die Fahrzeugkonstruktion (30a) erste Befestigungseinrichtungen zum wahlweisen Befestigen eines Kraftstofftanks (KT) oder eines Transformators oder einer Drosselspulen-Anordnung unterhalb des Bodens im Bereich eines Untergestells der Lokomotive aufweist, wobei die Fahrzeugkonstruktion (30a) zweite Befestigungseinrichtungen zum wahlweisen Befestigen einer Motor-Generator-Kombination (erster Fall) oder einer Stromwandler-Hochspannungsgerüst-Kombination (zweiter Fall) oberhalb des Bodens aufweist, wobei die Stromwandler-Hochspannungsgerüst-Kombination im zweiten Fall einen Wechselrichter aufweist, von dem aus einer Gleichspannung eine Dreiphasen-Wechselspannung erzeugt wird und der über eine Stromleitung mit zumindest einem Fahrmotor der Lokomotive verbunden ist.
